# FASCICULE DE BREVET EUROPEEN

(11) **EP 1 040 753 B1**
(45) Date de publication et mention de la délivrance du brevet: **18.06.2003**
(21) Numéro de dépôt: 00400155.8
(22) Date de dépôt: 21.01.2000
(51) Int. Cl.: A01K 1/06

(54) **Barrière à cornadis**
Selbstfanggitter
Stanchion

(30) Priorité: 05.10.1999 FR 9912379; 29.03.1999 FR 9903857
(43) Date de publication de la demande: 04.10.2000
(73) Titulaire: Etablissements Jourdain Société Anonyme, 45300 Pithiviers (FR)
(72) Inventeur: Simonneau, Francis Albert, 45140 St. Jean de la Ruelle (FR); Jourdain, Martial Maurice Marcel, 45300 Escrennes (FR)
(74) Mandataire: Vander-Heym, Serge

(56) Documents cités:
- EP-A- 0 823 992
- DE-U- 9 017 813
- FR-A- 2 751 841
- FR-A- 2 759 859
- US-A- 4 185 592

## Description

La présente invention est relative à des perfectionnements aux barrières à cornadis.

Dans sa forme la plus simple, une barrière à cornadis se compose d'une succession d'ouvertures délimitées, chacune, par un montant vertical réunissant deux longerons horizontaux, respectivement supérieur et inférieur, et par un bras pivotant.

Le bras pivotant peut être verrouillé pour empêcher l'accès à l'auge ou pour maintenir l'animal et permettre son alimentation ou son examen.

Le bras pivotant peut occuper deux ou trois positions selon qu'il s'agit d'un cornadis ordinaire ou d'un cornadis de sécurité.

Le brevet français N°76 13795 décrit un cornadis ordinaire, tandis que le brevet US N°5373813 décrit un cornadis de sécurité.

Le problème posé consiste à réaliser, automatiquement, le verrouillage du bras pivotant, en position de retenue, lorsque l'encolure d'un animal traverse la barrière.

En l'état de la technique ce résultat est obtenu en disposant une tringle au-dessus du longeron supérieur comportant des butées derrière lesquelles peuvent prendre appui des organes escamotables situés à la partie supérieure de chaque bras. Par le pivotement de la barre, il est possible d'escamoter les butées précitées pour déverrouiller tous les bras. Un tel dispositif est décrit, entre autres, dans le brevet français précité.

Dans ce brevet, il est décrit un dispositif comportant un chape, à l'extrémité supérieure de chaque bras, dont les branches, qui s'étendent de part et d'autre de la tringle pivotante, servent de guidage à un arbre coulissant, formant l'organe escamotable précité, reposant normalement sur ladite tringle qui comporte des dents présentant, chacune, deux faces, l'une, légèrement inclinée et formant rampe sur laquelle l'arbre précité monte durant le pivotement du bras et, l'autre, sensiblement verticale derrière laquelle vient prendre appui ledit arbre à la fin de la rotation pour assurer le verrouillage dudit bras en empêchant sa rotation en sens inverse. Dans cette position, le bras ne peut pas poursuivre sa rotation car sa partie inférieure prend appui contre une butée constituée, par exemple, par une extension du montant sur lequel ledit bras est articulé.

Lorsqu'il s'agit d'un cornadis de sécurité, c'est-à-dire d'un cornadis selon lequel le bras pivotant doit pouvoir pivoter librement lorsqu'il est déverrouillé de façon à ménager une ouverture triangulaire à pointe en haut, la dent décrite ci-dessus est inefficace pour assurer à elle seule le verrouillage.

La solution qui vient immédiatement à l'esprit consiste à utiliser une seconde dent disposée symétriquement par rapport à la première et ménageant entre elles un espace suffisant pour permettre le logement de l'arbre coulissant.

Cette solution, n'est pas satisfaisante pour deux raisons essentielles.

La première réside dans le fait que la présence de saillies fixes sur la tringle pivotante pose des problèmes lors de la fixation de ladite tringle qui présente une pluralité de paliers.

La seconde réside dans le fait que, comme le pivotement du bras est brutal, puisqu'il résulte de l'action de l'encolure de l'animal sur la partie inférieure dudit bras, l'arbre coulissant s'envole littéralement en montant sur la rampe de la dent et ne retombe pas, comme prévu, dans l'encoche formée par la partie vertic ale des deux dents : le verrouillage est donc quasiment impossible.

Dans le document DE-U-9017813, il est décrit une barrière comportant une tringle pivotante sur laquelle sont montés, positionnés et fixés des manchons comportant des encoches. Ce dispositif pose des problèmes, notamment, en ce qui concerne le montage de la tringle ainsi équipé.

La présente invention, qui remédie à ces inconvénients, consiste à pratiquer, sur la tringle pivotante usuelle, des encoches dans lesquelles tombent les arbres coulissants des bras comme spécifié dans la revendication 1.

La présente invention sera mieux comprise par la description qui va suivre faite en se référant aux dessins annexés à titre d'exemple indicatif, seulement, sur lesquels :
- la figure 1 est une vue en élévation d'une barrière à cornadis de sécurité;
- la figure 2 est une vue partielle et à plus grande échelle montrant le dispositif de l'invention;

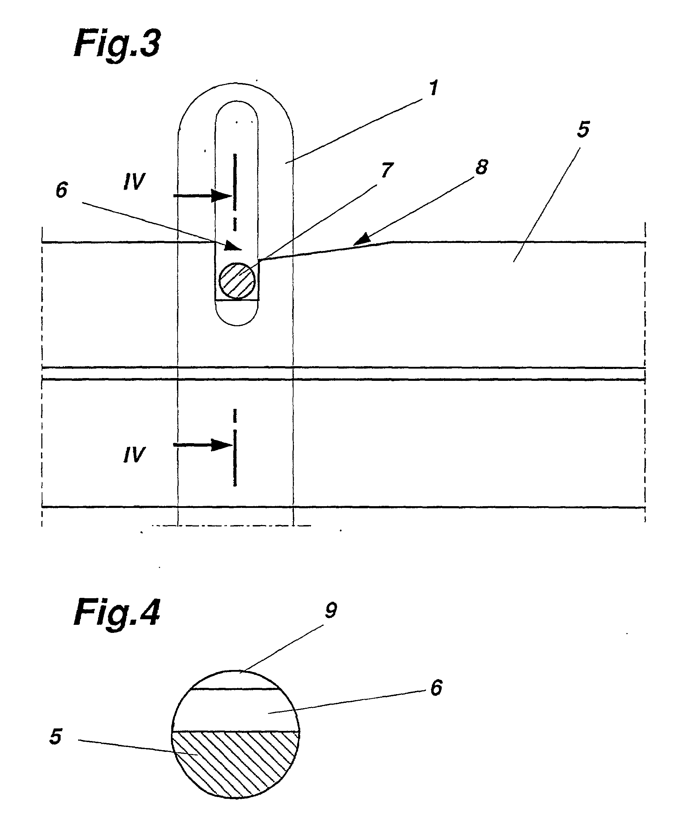

- la figure 3 est une vue, analogue à celle 2, montrant le verrouillage du bras pivotant;
- la figure 4 est une vue en coupe effectuée selon la ligne IV-IV de la figure 3;
- la figure 5 est une vue, analogue à celle 2, montrant le guidage de la tringle pivotante;
- la figure 6 est une vue en coupe effectuée selon la ligne VI-VI de la figure 5;
- la figure 7 est une vue en coupe effectuée selon la ligne VII-VII de la figure 5.

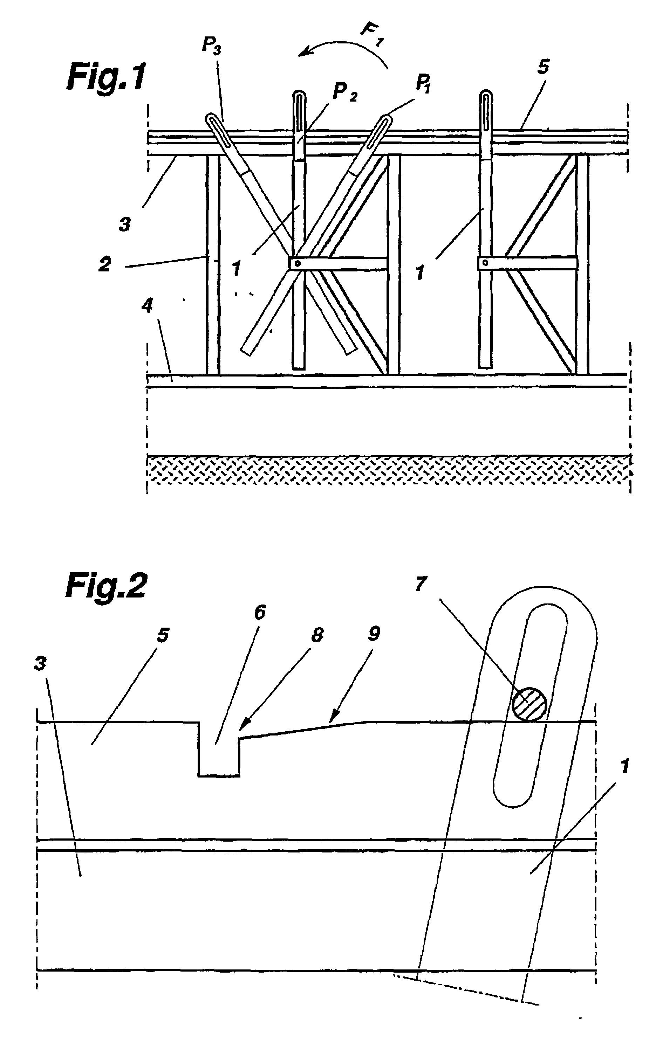

En se reportant à la figure 1, on voit que chaque bras pivotant 1 délimite, avec un montant 2 et les longerons 3 et 4, une ouverture à section variable.

Lorsque l'accès est libre, le bras 1 est dans la position P₁ et il délimite une ouverture triangulaire pointe en bas.

Lorsqu'un animal accède à l'auge, il engage son encolure dans cette ouverture et en l'abaissant il fait pivoter le bras selon la flèche F₁ jusqu'au moment où le dispositif de verrouillage s'oppose à ce mouvement et le maintient dans la position P₂, l'animal est alors entravé.

Cependant, et comme cela a été expliqué plus haut, si le pivotement est brutal, ce qui constitue le cas général, l'arbre coulissant du bras passe au-dessus de la saillie de retenue présente sur la tringle 5 et le bras vient occuper la position P₃.

Selon l'invention, la tringle 5 présente une encoche 6 dans laquelle tombe l'arbre 7 du bras durant le pivotement de ce dernier de façon à l'immobiliser dans la position souhaitée P₂.

De cette façon, la tringle 5 ne présente aucune aspérité pouvant compliquer son montage dans les paliers usuels afin de la rendre solidaire de la barrière.

Comme il n'y a pas lieu de rapporter des pièces compliquées et toujours volumineuses sur la tringle, il est possible d'utiliser une tringle dont le diamètre est bien supérieur à celle usuelle et ainsi d'augmenter la rigidité de cette pièce.

Ainsi, il est possible d'utiliser une tringle dont le diamètre est égal à celui des tubes utilisés pour réaliser les longerons et, ce faisant, de simplifier le stockage des matériaux de base. De plus, ce dispositif, qui ne fait pas appel à des pièces auxiliaires usinées séparément puis fixées sur la tringle, est d'un prix de revient très inférieur à ceux connus.

Selon une autre caractéristique de l'invention, l'un 8, au moins, des bords de chacune encoche se raccorde à la partie supérieure de la tringle par une partie 9 inclinée par rapport à l'axe de ladite tringle.

De cette façon, et contrairement aux dispositifs comportant une dent se raccordant à la tringle par une rampe, l'arbre 7 n'a pas tendance à être propulsé vers le haut durant le pivotement du bras, mais il descend naturellement la partie 9 et chute dans l'encoche 6.

Il va maintenant être décrit un palier de guidage de la tringle 5.

Les paliers réalisés jusqu'à présent sont ,en général, en nombre inférieur aux places de cornadis et ils ne peuvent pas être localisés dans la zone de débattement du bras pivotant, ce qui empêcherait la passage de l'arbre 7. De ce fait, la tringle 5 est insuffisamment maintenue.

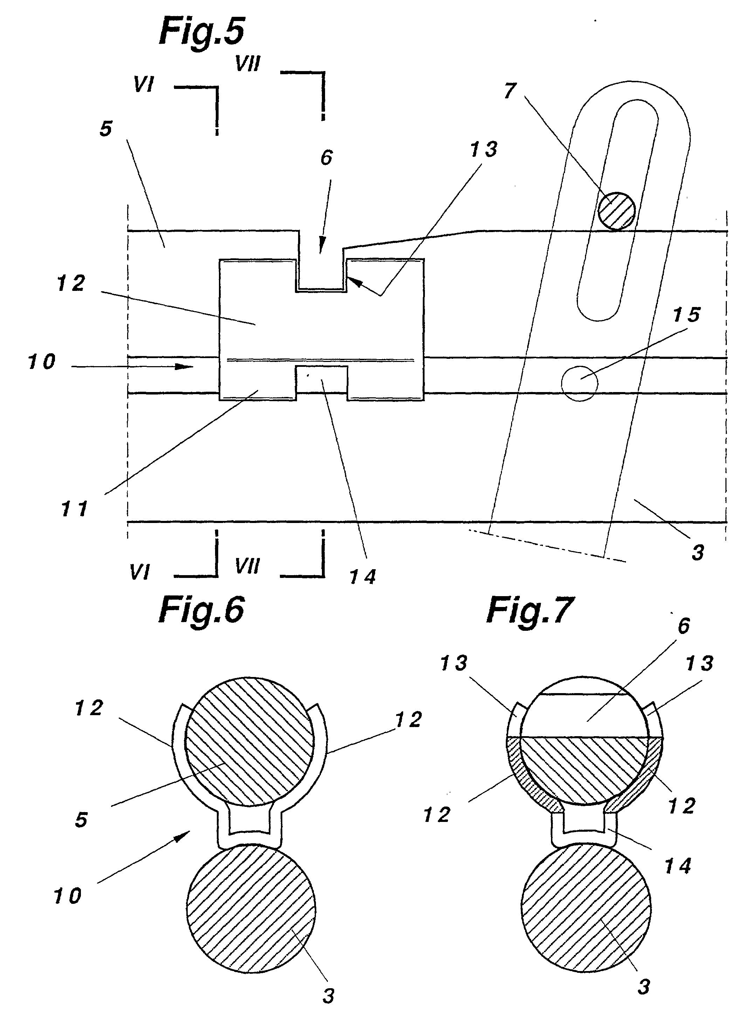

Selon l'invention, chaque palier 10 se présente sous la forme d'un étrier, dont la partie médiane 11 est fixée, de préférence par soudage, sur le longeron supérieur 3 et dont les branches 12 enserrent la tringle 5, comme cela ressort tout particulièrement de la figure 6, de façon à empêcher son déplacement vers le haut.

Comme la partie supérieure de la tringle 5 reste dégagée, ce palier 10 peut être placé au droit d'une encoche 6 (voir figure 5). Cette disposition est très avantageuse car elle permet d'encaisser les efforts au droit de l'encoche et d'annuler les effets, toujours négatifs, d'un affaiblissement de section résultant de la présence de ladite encoche.

Selon un mode de réalisation, les branches 12 du palier présente chacune une encoche 13 dont la section est quasi identique à celle de l'encoche 6. De cette façon, chaque palier contribue au verrouillage du bras pivotant.

Selon un autre mode de réalisation, la partie médiane 11 présente une encoche transversale 14, formant en coopération avec la partie supérieure du longeron 3 un orifice permettant le passage d'une broche pour le verrouillage manuel (non représentée car usuelle). Lorsque l'arbre 7 est maintenu dans les encoches 6 et 13, le trou 15 du bras pivotant est aligné avec l'orifice précité.

Bien que la description ait été faite en regard d'un cornadis de sécurité, le dispositif peut être appliqué à un cornadis ordinaire.

## Revendications

1. Barrière à cornadis comportant un bras pivotant (1) présentant à sa partie supérieure un arbre coulissant (7) susceptible de coopérer avec des encoches d'une tringle pivotante (5) disposée au-dessus du longeron supérieur (3), **caractérisée en ce que** les encoches (6), dans lesquelles peuvent tomber les arbres (7) des bras, sont pratiquées directement sur la tringle (5) à sa partie supérieure.

2. Barrière à cornadis selon la revendication 1, **caractérisée en ce que** l'un (8), au moins, des bords de chacune encoche se raccorde à la partie supérieure de la tringle par une partie (9) inclinée par rapport à l'axe de ladite tringle.

3. Barrière selon l'une quelconque des revendications 1 et 2, **caractérisée en ce que** le diamètre de la tringle (5) est sensiblement égal au diamètre des tubes utilisés pour réaliser les longerons.

4. Barrière selon l'une quelconque des revendications 1 à 3, **caractérisée en ce que** la tringle est maintenue et guidée par des paliers (10) se présentant, chacun, sous la forme d'un étrier dont la partie médiane (11) est fixée contre le longeron supérieur et dont les branches (12) enserrent ladite tringle de façon à empêcher son déplacement vers le haut.

5. Barrière selon la revendication 4, **caractérisé en ce que** chaque branche du palier présente une encoche (13) don la section est quasi identique à celle de l'encoche (6) de la tringle.

6. Barrière selon l'une quelconque des revendications 4 et 5, **caractérisée en ce que** la partie médiane (11) du palier présente une encoche transversale (14) formant en coopération avec la partie supérieure du longeron (3) une ouverture de réception d'une broche de verrouillage manuel.

## Patentansprüche

1. Gatterbarriere mit einem an seinem oberen Ende eine Gleitwelle (7) aufweisenden Schwenkarm (1), welche zur Zusammenarbeit mit Einkerbungen einer oberhalb des oberen Längsträgers (3) angeordneten Schwenkstange (5) geeignet sind, **dadurch gekennzeichnet, dass** die Einkerbungen (6), in denen die Wellen (7) der Arme fallen können, direkt auf der Stange (5) an ihrem oberen Teil praktiziert sind.

2. Gatterbarriere gemäß Anspruch 1, **dadurch gekennzeichnet, dass** wenigstens einer (8) der Ränder jeder Einkerbung mit dem oberen Teil der Stange durch einen im Verhältnis zur Achse der besagten Stange geneigten Teil (9) verbunden ist.

3. Barriere gemäß Anspruch 1 und 2, **dadurch gekennzeichnet, dass** der Durchmesser der Stange (5) deutlich gleich dem Durchmesser der zur Realisierung der Längsträger verwendeten Röhren ist.

4. Barriere gemäß Anspruch 1 bis 3, **dadurch gekennzeichnet, dass** die Stange durch Lager (10) gehalten und geführt wird, die jedes die Form eines Bügels aufweisen, dessen Mittelteil (11) gegen den oberen Längsträger befestigt ist und dessen Zweige (12) die besagte Stange derart umfassen, dass ihre Verschiebung nach oben verhindert wird.

5. Barriere gemäß Anspruch 4, **dadurch gekennzeichnet, dass** jeder Zweig des Lagers eine Einkerbung (13) aufweist, deren Durchmesser praktisch identisch mit dem der Einkerbung (6) der Stange ist.

6. Barriere gemäß Anspruch 4 und 5, **dadurch gekennzeichnet, dass** der Mittelteil (11) des Lagers eine im Zusammenwirken mit dem oberen Teil des Längsträgers (3) Aufnahmeöffnung eines manuellen Verriegelungsstiftes bildende transversale Einkerbung (14) aufweist.

## Claims

1. "Cornadis" barrier comprising a pivoting arm (1) having at its upper portion a sliding shaft (7) able to cooperate with the notches of a pivoting rod (5) placed above the upper member (3), **characterised in that** the notches (6) in which the shafts (7) of the arms can fall are made directly on the upper portion of the rod (5).

2. "Cornadis" barrier according to claim 1, **characterised in that** at least one (8) of the edges of each notch is connected to the upper portion of the rod by an element (9) slanted with respect to the axis of said rod.

3. Barrier according to claim 1 or 2, **characterised in that** the diameter of the rod (5) is approximately equal to the diameter of the tubes used to embody the members.

4. Barrier according to one of claims 1 to 3, **characterised in that** the rod is supported and guided by bearings (10) each appearing in the form of a stirrup whose median portion (11) is fixed against the upper member and whose branches (12) enclose said rod so as to stop the latter from moving upwards.

5. Barrier according to claim 4, **characterised in that** each branch of the bearing has one notch (13) whose section is almost identical to that of the notch (6) of the rod.

6. Barrier according to claim 4 or 5, **characterised in that** the median portion (11) of the bearing has a transversal notch (14) forming along with the upper portion of the member (3) an opening for receiving a manual locking pin.
